# EUROPEAN PATENT APPLICATION

(11) **EP 4 607 773 A1**
(43) Date of publication of application: **27.08.2025**
(21) Application number: 23879230.3
(22) Date of filing: 20.10.2023
(51) Int. Cl.: H02K 7/00, F16H 57/021

(54) **WIND MOTOR PARALLEL-STAGE INTERMEDIATE-SPEED SHAFT SYSTEM CONNECTING STRUCTURE, AND SHAFT SYSTEM**

(30) Priority: 21.10.2022 CN 202211294937
(71) Applicant: ZF Wind Power (Tianjin) Co., Ltd., Tianjin 300402 (CN); ZF Wind Power Antwerpen NV, 3920 Lommel (BE)
(72) Inventor: WU, Shubin, Tianjin 300402 (CN)
(74) Representative: ZF Friedrichshafen AG
(86) International application number: PCT/CN2023/125753
(87) International publication number: WO 2024/083245

(57) **Abstract**

A wind turbine generator parallel-stage intermediate-speed shaft train connecting structure, wherein a sun shaft and a hollow shaft are connected together by means of rigid connection. A bearing for the hollow shaft is arranged on a box body on one side of a generator. Floating shift of the sun shaft during the operation of the generator is absorbed by the bearing. Because interference splines are used to achieve the rigid connection between the sun shaft and the hollow shaft, there is no need to provide lubrication and cooling for the splines, and the structure has low manufacturing costs and the structure is simple. Further provided is a wind turbine generator parallel-stage intermediate-speed shaft train, having the advantages of simple structure and low maintenance costs.

## Description

### TECHNICAL FIELD

The present disclosure relates to the field of wind power generation, and particularly to a wind turbine generator parallel-stage intermediate-speed shaft train connecting structure and a shaft train.

### BACKGROUND ART

A wind turbine generator converts wind energy into electrical energy by converting low-speed rotation of a low-speed shaft on a blade side of the wind turbine generator to high-speed rotation of a high-speed shaft on a generator side of the wind turbine generator by means of a multi-stage shaft train connecting structure. In a parallel-stage intermediate-speed shaft train, a sun shaft close to the blade side is engaged with a hollow shaft on the generator side by means of splines to transmit a torque to the generator side. Since a transmission structure itself is unavoidably subject to certain dimensional errors, there is a certain floating shift of an axis of rotation of the sun shaft. In order to ensure normal operations of the generator, the floating shift needs to be eliminated. To this end, the splines between the sun shaft and the hollow shaft of the wind turbine generator are configured as flexible splines, the shift caused by floating of the sun shaft is absorbed by a clearance between the splines. However, spline teeth of the flexible splines need specialized surface hardening treatment, contact surfaces need to be lubricated and cooled with a pressure lubricant, and matched lubricating devices increase the size and complexity of the wind turbine generator, which also leads to an increase in cost.

### SUMMARY

An objective of the present disclosure is to provide a wind turbine generator parallel-stage intermediate-speed shaft train connecting structure, with no need to lubricate splines of a sun shaft and a driven shaft. The present disclosure further provides a wind turbine generator parallel-stage intermediate-speed shaft train.

According to an aspect of embodiments of the present disclosure, provided is a wind turbine generator parallel-stage intermediate-speed shaft train connecting structure, including a sun shaft, a driven shaft, and a driven shaft bearing. The sun shaft is arranged through the driven shaft and is connected to the driven shaft, and the driven shaft is connected to a box body of a wind turbine generator by means of a bearing for the driven shaft, where the sun shaft and the hollow shaft are configured to be in rigid connection, and the bearing for the driven shaft is arranged at an end of the driven shaft close to the generator. In the connecting structure between the sun shaft and the driven shaft, interference splines are replaced with flexible splines, and floating shift of the sun shaft is no longer absorbed by a spline clearance, so that the relative frictions between the splines are eliminated, thereby omitting a spline lubrication structure and reducing the structure complexity of the wind turbine generator. Due to the rigid connection between the splines, there is no need to harden the spline surface, which saves manufacturing costs. On the other hand, in the connecting structure, a bearing for the driven shaft at an end of blades is omitted, which minimizes the angular offset of the bearing when a toothed part of the sun shaft close to the blade side floats radially; besides, the bearing being disposed close to an end of the generator is conducive to maintenance on site. The bearing on the generator side is used for absorbing skew caused by the floating of the sun shaft, thereby simplifying the mechanical structure. Maintenance on the bearing for the driven shaft is carried out only from the generator side, which reduces the difficulty in maintenance.

Further, the driven shaft bearing is configured as a pair of rolling bearings for absorbing floating shift of the driven shaft. With the pair of rolling bearings arranged side by side, the skew of the driven shaft caused by the floating of the sun shaft can be shared effectively to avoid the wear of a single bearing.

Further, the driven shaft bearing is configured as a tapered roller bearing. According to amplitude of the floating shift of the sun shaft, axial skew of the driven shaft can be effectively absorbed by reasonably adjusting an taper angle of tapered rollers and an axial play of the bearing, thereby ensuring the transmission effect.

Further, the pair of rolling bearings is arranged in the form of an X. The bearings arranged in the form of an X can effectively constrain the driven shaft while absorbing the floating shift of the sun shaft, thereby ensuring the stability of the shaft train.

Further, an outer ring of the driven shaft bearing is fixedly mounted on the box body of the wind turbine generator. The outer ring of the bearing is fixedly mounted on the box body of the wind turbine generator, which facilitates subsequent maintenance, disassembly and assembly.

Further, the sun shaft is connected to a rotating shaft at one end of the blades by means of a planetary gear. The sun shaft is connected to a previous-stage transmission structure at an end of the blades by means of the planetary gear to increase rotational speed and transmit a torque to a next-stage transmission structure at an end of the generator.

Further, the driven shaft is connected to a rotating shaft at one end of the generator by means of a planetary gear. The driven shaft and the sun shaft are in rigid connection so that the torque from the sun shaft is transmitted to a next-stage transmission structure by means of the planetary gear to further increase the rotational speed.

Further, the driven shaft is configured as a hollow shaft, and the sun shaft is arranged through the hollow shaft. With the hollow shaft structure, the weight of parts can be reduced and the transmission efficiency can be improved.

Further, the sun shaft and the driven shaft are in rigid connection by means of interference splines.

According to another aspect of embodiments of the present disclosure, provided is a wind turbine generator parallel-stage intermediate-speed shaft train. the wind turbine generator parallel-stage intermediate-speed shaft train connecting structure according to any of the foregoing embodiments is used as a transmission structure between a blade-side transmission mechanism and a generator-side transmission mechanism of the shaft train. The shaft train has the advantage of simple structure, low difficulty in maintenance and low manufacturing costs.

### BRIEF DESCRIPTION OF THE DRAWINGS

Fig. 1 is a schematic diagram of a wind turbine generator parallel-stage intermediate-speed shaft train connecting structure according to an embodiment;
Fig. 2 is a schematic diagram of a wind turbine generator parallel-stage intermediate-speed shaft train according to a comparative example;
Fig. 3a is a partial structural schematic diagram of rigid splines according to an embodiment;
Fig. 3b is a partial structural schematic diagram of flexible splines according to an embodiment; and
Fig. 4 is a structural schematic diagram of a gearbox of a wind turbine generator.

The above accompanying drawings are intended to provide a detailed description of the present disclosure to allow those skilled in the art to understand the technical concept of the present disclosure, and are not intended to limit the present disclosure. For the sake of brevity, the above accompanying drawings only schematically draw structures related to the technical features of the present disclosure, and do not draw the complete structure and all the details strictly according to the actual scale.

### DETAILED DESCRIPTION OF EMBODIMENTS

The present disclosure is hereinafter further described in detail with reference to specific embodiments and accompanying drawings.

The term "embodiment" mentioned herein means that the specific features, structures, or characteristics described in conjunction with the embodiment can be encompassed in at least one embodiment herein. The term appearing at various locations in the description does not necessarily refer to the same embodiment, nor is it limited to mutually exclusive independent or alternative embodiments. Those skilled in the art will appreciate that the embodiments herein may be combined with other embodiments without structural conflicts.

In the description herein, unless otherwise explicitly specified and defined, the technical terms such as "mount", "couple", and "connect" should be understood in a broad sense, for example, they may refer to a flexible connection, a fixed connection, or an integrated connection; For those of ordinary skill in the art, the specific meanings of the above terms in the embodiments of the present application can be understood according to specific situations.

In the descriptions herein, the terms such as "up", "down", "left", "right", "lateral", "longitudinal", "radial" and "axial" that indicate orientation or positional relationships are intended to accurately describe the embodiments and to simplify the description, not to limit the parts or structures involved to a particular orientation, mounting or operation in a particular orientation, and are not to be construed as a limitation on the embodiments herein.

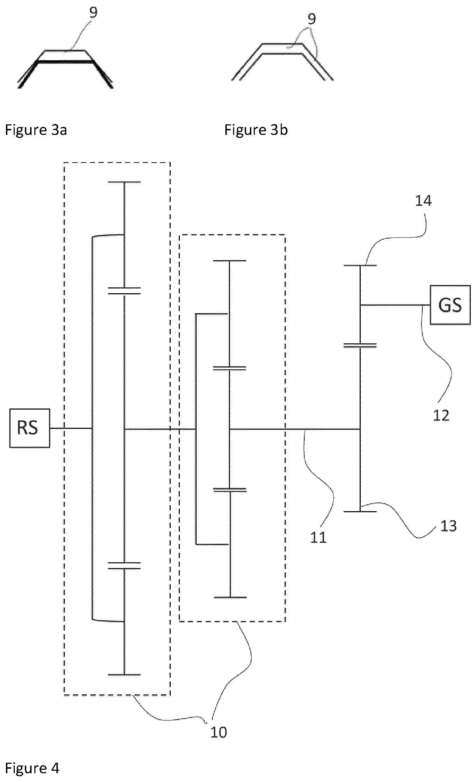

Wind turbine generators are power generation devices that convert kinetic energy of an air flow into electrical energy, which occupy an important position in the field of new energy, where asynchronous wind turbine generators are one of common types of wind turbine generators. A gearbox of an asynchronous wind turbine generator is shown in Fig. 4, with one end connected to a blade side (RS). A torque from blades is transmitted and rotational speed is increased by means of a multi-stage planetary gear structure 10. An intermediate-speed shaft 11 and a high-speed shaft 12, which are arranged in parallel and close to the generator side (GS), form a parallel stage of the gearbox, and are in engaged transmission by means of an intermediate gear 13 and a high-speed gear 14 to further increase the rotational speed, and then the high-speed shaft 12 causes a generator rotor to realize power generation.

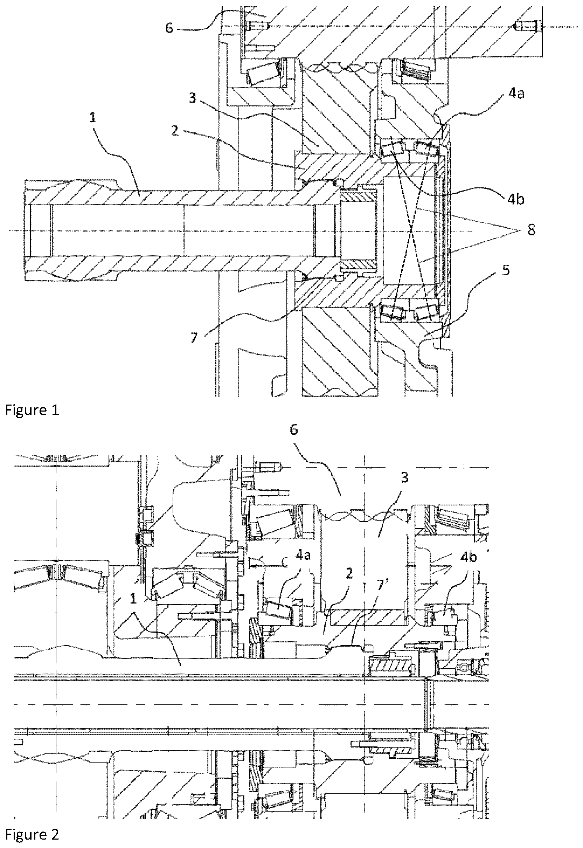

In a comparative example, a parallel-stage intermediate-speed shaft train connecting structure of the wind turbine generator is shown in Fig. 2. A sun shaft 1 is arranged through a hollow shaft 2 to transmit a torque from a preceding stage transmission mechanism to the hollow shaft 2, and then the torque is transmitted from the hollow shaft 2 to a next stage transmission mechanism by means of a planetary gear 3 mounted in a planetary carrier 6. The sun shaft 1 engages with the hollow shaft 2 by means of flexible splines 7'. The hollow shaft 2 is supported by both a first bearing 4a arranged close to one end of the blades and a second bearing 4b arranged close to one end of the generator. The transmission structure itself has certain dimensional tolerances, for example, there may be differences in the size between multiple planetary gears of a preceding stage drive planetary gear system, which results in certain inevitable floating shift of an axis of rotation of the sun shaft. Since this floating shift needs to be absorbed by means of the flexible splines 7', there is a certain dimensional clearance between inner splines and outer splines of the flexible splines 7', allowing the engagement position of the splines to float within a certain range. This design can eliminate the floating shift of the sun shaft, however, due to the relative movement between spline teeth, spline teeth need the surface hardening treatment to avoid rapid wear, and moreover, a specialized lubrication system is needed for delivering a pressure lubricant to cool and lubricate the surfaces of the spline teeth. This leads in a complex structure and higher costs of the wind turbine generator. Moreover, the first bearing 4a being arranged on the side of the wind motor close to the blades will result in the need to work separately from both sides of the wind turbine generator when the hollow shaft 2 is repaired or replaced, which increases the cost and difficulty of maintenance. In other embodiments, splines 7 may also be configured in other forms of rigid connection such as an interference flat-key connection or an interference pin connection.

In order to solve the above problems, an embodiment of one aspect of the present disclosure provides a wind turbine generator parallel-stage intermediate-speed shaft train connecting structure, as shown in Fig. 1. In the connecting structure, a sun shaft 1 is arranged through a hollow shaft 2 serving as a driven shaft, and engages with the hollow shaft by means of the splines 7, so that a torque from a preceding stage transmission mechanism is transmitted to a planetary gear 3 through the hollow shaft 2, and then is transmitted to a next-stage transmission mechanism. Herein, the splines 7 between the sun shaft 1 and the hollow shaft 2 are configured as interference splines to realize rigid connection between the sun shaft 1 and the hollow shaft 2 to avoid significant frictions between spline teeth of the splines 7, so that a corresponding cooling and lubrication system can be omitted from the wind turbine generator, achieving structural simplification and cost optimization. No bearing is provided at an end of the hollow shaft 2 close to the blades, i.e., the end connected to the sun shaft 1. A first bearing 4a and a second bearing 4b are arranged only at an end close to the generator to support the hollow shaft 2. This allows for operations only on the generator side to repair and replace the hollow shaft 2, which effectively reduces the maintenance workload and operational difficulty.

No bearing is provided at the end of the hollow shaft 2 close to the blades such that this end of the hollow shaft 2 can float with the sun shaft 1, while the end of the hollow shaft 2 close to the generator is fixed by means of the first bearing 4a and the second bearing 4b, and the floating shift of the sun shaft 1 is converted into tilted oscillation of the hollow shaft 2 around the first bearing 4a and the second bearing 4b. Since the floating of the sun shaft 1 occurs at a distal end, the first bearing 4a and the second bearing 4b have small angular offset, and the adverse effects of this tilted oscillation on the transmission mechanism can be eliminated by matching dimensional parameters of the first bearing 4a and the second bearing 4b. In some embodiments, the first bearing 4a and the second bearing 4b may be replaced with a ball bearing. In a preferred embodiment, the first bearing 4a and the second bearing 4b are configured as a pair of tapered roller bearings. The first bearing 4a and the second bearing 4b can effectively absorb the oscillation of the hollow shaft 2 by setting a taper angle and an axial clearance of tapered rollers. In a further preferred embodiment, the first bearing 4a and the second bearing 4b are configured as a pair of tapered roller bearings arranged in the form of an X, i.e., the two bearings are arranged in a "face-to-face" form, and a load center of the bearings (an intersection between dotted lines 8) is located between the two bearings, so that the hollow shaft 2 is secured better while the skew of the hollow shaft 2 is absorbed. In other embodiments, the first bearing 4a and the second bearing 4b may also be configured as a single tapered roller bearing, which makes the structure simpler. In a preferred embodiment, outer rings of the first bearing 4a and the second bearing 4b are fixedly mounted to a box body of the wind turbine generator to provide secure support for the hollow shaft 2.

In some embodiments, the sun shaft 1 is connected to the preceding stage transmission mechanism by means of a planetary gear structure to increase the rotational speed while transmitting the torque. Similarly, the hollow shaft is connected to the next-stage transmission mechanism by means of a planetary gear 3 mounted in a planetary carrier 6 to allow the next-stage transmission mechanism to rotate at a higher speed while transmitting the torque.

In some embodiments, the sun shaft may also be configured as a hollow shaft through which the driven shaft is arranged for torque transmission.

An embodiment of another aspect of the present disclosure provides a wind turbine generator parallel-stage intermediate-speed shaft train. The wind turbine generator parallel-stage intermediate-speed shaft train connecting structure according to any of the above embodiments is used for transmission between a blade-side transmission mechanism and a generator-side transmission mechanism of the shaft train. Since there is no need to provide a pressure lubrication system for the flexible splines 7', the wind turbine generator parallel-stage intermediate-speed shaft train has a simpler structure and lower manufacturing costs. Since the bearings for the hollow shaft 2 are each located on the generator side, the wind turbine generator shaft train also has the advantage of simpler maintenance and reduced downtime for maintenance.

The above embodiments are intended to provide a further detailed description of the present disclosure with reference to the accompanying drawings to allow those skilled in the art to understand the technical concept of the present disclosure, and are not intended to limit the present disclosure. Within the scope of the claims of the present disclosure, optimization or equivalent substitution of structures of the parts involved or combination of implementations in different embodiments all fall within the scope of protection of the present disclosure without conflicts of structure and principles.

## Claims

1. A wind turbine generator parallel-stage intermediate-speed shaft train connecting structure, comprising a sun shaft, a driven shaft, and a driven shaft bearing, the sun shaft and the driven shaft being arranged coaxially and connected to each other, and the driven shaft being connected to a box body of a wind turbine generator by means of the driven shaft bearing, wherein the sun shaft and the driven shaft are configured to be in rigid connection, and the driven shaft bearing is arranged at one end of the driven shaft close to the generator to allow an end of the driven shaft close to blades to float with the sun shaft.

2. The wind turbine generator parallel-stage intermediate-speed shaft train connecting structure according to claim 1, wherein the driven shaft bearing is configured as a pair of rolling bearings for absorbing floating shift of the driven shaft.

3. The wind turbine generator parallel-stage intermediate-speed shaft train connecting structure according to claim 2, wherein the driven shaft bearing is configured as a tapered roller bearing.

4. The wind turbine generator parallel-stage intermediate-speed shaft train connecting structure according to claim 3, wherein the pair of rolling bearings is arranged in the form of an X.

5. The wind turbine generator parallel-stage intermediate-speed shaft train connecting structure according to claim 4, wherein an outer ring of the driven shaft bearing is fixedly mounted on the box body of the wind turbine generator.

6. The wind turbine generator parallel-stage intermediate-speed shaft train connecting structure according to claim 1, wherein the sun shaft is connected to a rotating shaft at one end of the blades by means of a planetary gear.

7. The wind turbine generator parallel-stage intermediate-speed shaft train connecting structure according to claim 6, wherein the driven shaft is connected to a rotating shaft at one end of the generator by means of a planetary gear.

8. The wind turbine generator parallel-stage intermediate-speed shaft train connecting structure according to any one of claims 1 to 7, wherein the driven shaft is configured as a hollow shaft, and the sun shaft is arranged through the hollow shaft.

9. The wind turbine generator parallel-stage intermediate-speed shaft train connecting structure according to any one of claims 1 to 7, wherein the sun shaft and the driven shaft are in rigid connection by means of interference splines.

10. A parallel-stage intermediate-speed shaft train, comprising a blade-side transmission mechanism and a generator-side transmission mechanism, wherein a wind turbine generator parallel-stage intermediate-speed shaft train connecting structure according to any one of claims 1 to 9 is used between the blade-side transmission mechanism and the generator-side transmission mechanism.
